# EUROPEAN PATENT APPLICATION

(11) **EP 4 295 976 A1**
(43) Date of publication of application: **27.12.2023**
(21) Application number: 23180335.4
(22) Date of filing: 20.06.2023
(51) Int. Cl.: B22F 12/00, B33Y 30/00, B22F 10/28, B33Y 10/00, E05C 9/18

(54) **THREE-DIMENSIONAL PRINTING SYSTEM WITH ROBUST CHAMBER LOCKING MECHANISM**

(30) Priority: 21.06.2022 US 202263353871 P
(71) Applicant: LayerWise NV, 3001 Leuven (BE)
(72) Inventor: Verhagen, Bas, 2220 Heist-op-den-Berg (BE)
(74) Representative: dompatent von Kreisler Selting Werner - Partnerschaft von Patent- und Rechtsanwälten mbB

(57) **Abstract**

A three-dimensional printing system for manufacturing a three-dimensional article includes a housing, a door, and a door locking system. The housing encloses a process chamber and has a vertical front surface with an opening providing access to the process chamber. The door is coupled to the front surface to be moved between an open position and a closed position. The door locking system includes a plurality of pins, a locking plate, and a lock actuator. The plurality of pins extend along a direction that is perpendicular to the vertical front surface when the door is in the closed position. The locking plate defines a plurality of holes positioned to receive the plurality of pins when the door is rotated into the closed position. The lock actuator is coupled to the locking plate and configured to translate the locking plate between an unlocked position and a locked position.

## Description

### Cross Reference to Related Applications

This non-provisional patent application claims priority to U.S. Provisional Application Serial Number 63/353,871, Entitled "Three-Dimensional Printing System with Robust Chamber Locking Mechanism" by Bas Verhagen, filed on June 21, 2022, incorporated herein by reference under the benefit of U.S.C. 119(e).

### Field of the Invention

The present disclosure concerns an apparatus configured for a layer-by-layer fabrication of three-dimensional (3D) articles in a controlled and secure gaseous process chamber environment. More particularly, the present disclosure includes a system configured to assure integrity of the process chamber closure during the fabrication process.

### Background

Three dimensional (3D) printing systems are in rapidly increasing use for purposes such as prototyping and manufacturing. One type of three dimensional printer utilizes a layer-by-layer process to form a three dimensional article of manufacture from powdered materials within a process chamber. Each layer of powdered material is selectively fused at a build plane using an energy beam such as a laser, electron, or particle beam. Higher productivity printers can utilize multiple energy beams. Some of these systems require the use of inert gases and very high powered energy beams. A breach of the process chamber during operation could present serious safety issues. There is a need to provide a safe, reliable, and convenient mechanism to secure the process chamber during fabrication.

### Summary

In a first aspect of the disclosure a three-dimensional printing system is configured to manufacture a three-dimensional article. The three-dimensional printing system includes a housing, a door, a door locking system, and a perimeter seal. The housing encloses a process chamber and has a vertical front surface defining a vertical opening coupled to the process chamber. The door is moveably coupled to the vertical front surface and has an open position providing access to the opening and a closed position with an inside surface of the door covering the opening. The door locking system includes a plurality of pins, a locking plate, and a lock actuator. The plurality of pins extend along a direction that is perpendicular to the vertical front surface when the door is in the closed position. The plurality of pins individually have a shank coupled to a distal head to define a slot along the shank. The locking plate defines a plurality of holes individually having a wider section and a narrower section along a latching axis. The plurality of holes are positioned to receive the plurality of pins when the door is rotated into the closed position. The lock actuator is coupled to the locking plate and configured to translate the locking plate along the locking axis between an unlocked position at which the wider section aligns with the distal head and a locked position at which the narrower section is positioned under the distal head. The perimeter seal seals the process chamber to the door when the door is in the closed position.

A second aspect of the disclosure includes a method of manufacturing a three-dimensional article using the three-dimensional printing system of the first aspect of the disclosure. The method includes operating the actuator to translate the locking plate from the unlocked position to the locked position, and operating the three-dimensional printing system to fabricate the three-dimensional article. The method can further include operating a gas handling system to evacuate the process chamber, and operating the gas handling system to backfill the process chamber with an inert gas before operating the three-dimensional printing system to fabricate the three-dimensional article. Operating the actuator can occur at least partially concurrently with operating the gas handling system.

A third aspect of the disclosure includes a housing, a pair of locking plates, a door, a plurality of pins, a pair of lock actuators, and a perimeter seal. The housing encloses a process chamber and has a vertical front surface defining a vertical opening coupled to the process chamber. The pair of locking plates includes a first locking plate and a second locking plate slidingly coupled to the housing at opposed positions with respect to a first lateral axis. The pair of locking plates individually have a long axis aligned with a vertical axis and individually define a plurality of holes. The plurality of holes individually include a a wider section and a narrower section along a latching axis. The latching axis is aligned with the vertical axis. The door is movably coupled to the vertical front surface. The door has an open position providing access to the opening and a closed position with an inside surface of the door covering the opening. The plurality of pins are coupled to the door and include a pair of pin arrays including a first pin array and a second pin array corresponding to the first and second pair of locking plates. The pair of locking plates are spaced apart with respect to the first lateral axis. The plurality of pins extend from the inside surface and individually have a shank coupled to a distal head to define a slot along the shank between the inside surface and the distal head. Closing the door causes the plurality of pins to be individually received into the wider section of one of the plurality of holes. The pair of lock actuators are coupled to the pair of locking plates and are individually configured to translate one of the pair of locking plates along the locking axis between an unlocked position at which the wider section aligns with the distal head and a locked position at which the narrower section is positioned under the distal head. The perimeter seal seals the process chamber to the door when the door is in the closed position.

### Brief Description of the Figures

FIG. 1A is an isometric drawing of a three-dimensional (3D) printing system with some details and auxiliary equipment omitted for simplicity. The three-dimensional (3D) printing system is shown including a housing and a door in an open position or configuration.
FIG. 1B is an isometric drawing of a three-dimensional (3D) printing system with some details and auxiliary equipment omitted for simplicity. The three-dimensional (3D) printing system is shown including a housing and a door in closed position or configuration.
FIG. 2 is a schematic diagram of a 3D printing system with some features omitted for simplicity.
FIG. 3 is a simplified electrical block diagram of a 3D printing system.
FIG. 4 is a rear view of a door and a locking system.
FIG. 5 is a side view of a first embodiment of a single pin in isolation.
FIG. 6 is a front view of a portion of a locking plate.
FIG. 7 is a side view of a second embodiment of a single pin coupled to a portion of a door.
FIG. 8 is an isometric drawing depicting engagement between a pin and a locking plate.
FIG. 9 is an isometric drawing of a 3D printing system with emphasis on a lock actuator coupled to a locking plate.
FIG. 10A is an isometric drawing depicting interaction between a pin and a locking plate in an unlocked position.
FIG. 10B is an isometric drawing depicting interaction between a pin and a locking plate in a partially locked position.
FIG. 10C is an isometric drawing depicting interaction between a pin and a locking plate in a locked position.
FIG. 11 is a flowchart depicting an embodiment of a method for manufacturing a three-dimensional (3D) article.

### Detailed Description of the Preferred Embodiments

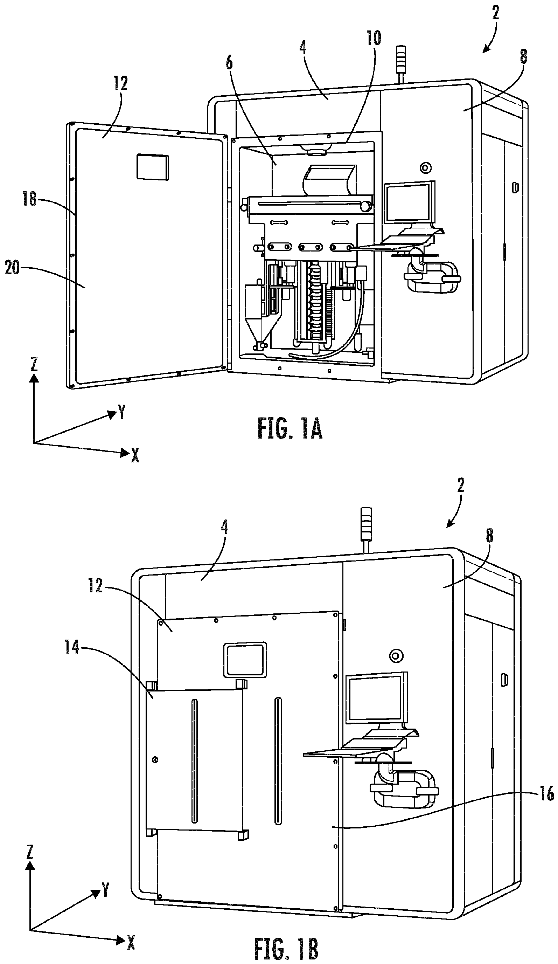

FIGS. 1A and 1B are isometric drawings of a three-dimensional (3D) printing system 2 with some details and some auxiliary equipment omitted for simplicity. In describing 3D printing system 2, certain mutually perpendicular axes will be used including an X-axis, a Y-axis, and a Z-axis. The X-axis is a generally horizontal axis X that will also be referred to as a first lateral axis X. The Y-axis is a generally horizontal axis Y that will also be referred to as a second lateral axis Y. The Z-axis is a vertical axis that will also be referred to as vertical axis Z that is generally aligned with a gravitational reference. The use of the word "generally" indicates that a direction or other geometric aspect is by design but may vary with normal engineering or mechanical tolerances or moderately non-level surfaces.

The 3D printing system 2 includes a housing 4 that encloses an internal process chamber 6. Housing 4 has a vertical front surface 8 that is rectangular and extends along the X and Z axes. Vertical front surface 8 defines an opening 10 that is coupled to the internal process chamber 6, is rectangular, and extends along the X and Z axes. 3D printing system 2 includes a door 12 that is rotatively or moveably mounted to the vertical front surface 8 by a single or compound hinge 14. A compound hinge 14 allows the door 12 to be closed with an optimal geometry of closure.

FIGS. 1A and 1B illustrate the door 12 in an open (1A) and closed (1B) position respectively. The open position of door 12 allows access to the process chamber 6 through opening 10 so that modules, metal powder, fabricated 3D articles, and other articles can be loaded into or unloaded from the process chamber 6. When the door 12 is in a closed position, a perimeter seal 16 seals the process chamber 6 from an outside atmosphere so that it can be evacuated and backfilled with an inert gas. In the illustrated embodiment, the door 12 includes a gasket 18 that provides the perimeter seal 16 when the door 12 is in the closed position. Gasket 18 can be a compressible gasket such as an O-ring, an injection molded gasket, or another material that provides a reliable seal. When the door 12 is in the closed position, the door 12 covers opening 10 with inside surface 20 of door 12. The gasket 18 is mounted to the inside surface 20 of the door 12 and is compressed between the inside surface 20 and the vertical front surface 8 when the door 12 is closed.

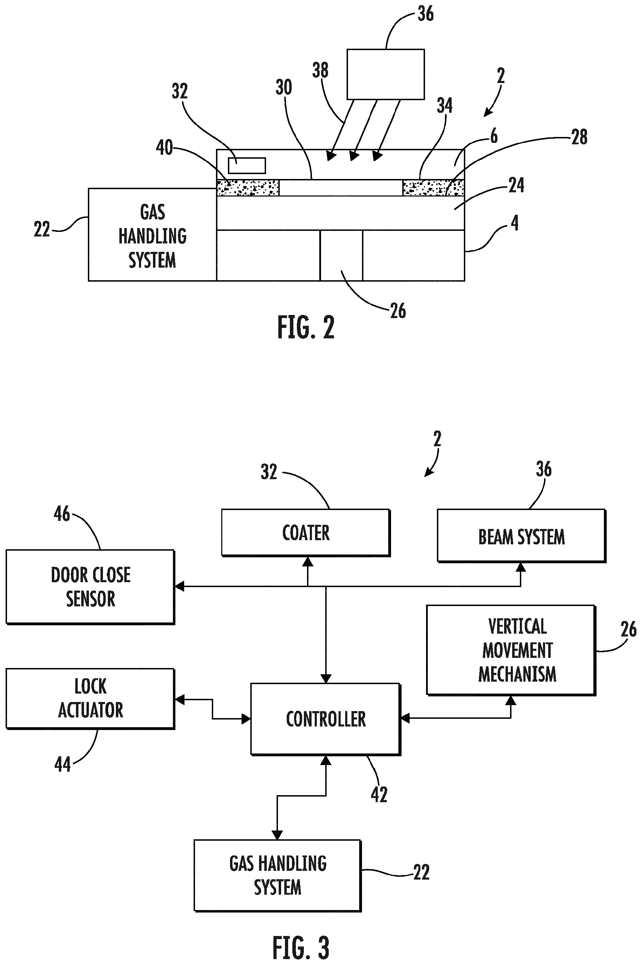

FIG. 2 is a schematic diagram of the 3D printing system 2 with some features missing for simplicity. System 2 includes a gas handling system 22 that is configured to evacuate and backfill the internal process chamber 6. Gas handling system 22 includes a vacuum pump for evacuating or depleting oxygen from chamber 6. System 22 also includes a controllable valve that couples a source of inert gas to the chamber 6. In one embodiment, the source of inert gas can be a pressurized argon bottle. System 22 can also include conduits and filters for recirculating and filtering the inert gas to remove contamination and airborne fine powder. Gas handling systems 22 are known in the art for 3D printing systems 2 that selectively fuse, sinter, and/or melt metallic powders.

System 2 includes a metal platen 24 coupled to a vertical movement mechanism 26. The metal platen 24 has a top or an upper surface 28 upon which a 3D article 30 is formed. The vertical movement mechanism 26 can include a motor coupled to a lead screw. The lead screw is threaded into a nut that is coupled to the metal platen 24. The lead screw has an outer helical thread and the nut has an inner helical thread. When the motor turns the lead screw, the interaction between the helical threads will translate the metal platen 24 upward or downward. Motorized lead screws as described are known in the art for various movement mechanisms used for transporting stages, platens, and build plates in 3D printing systems 2.

A powder coater 32 is configured to coat the upper surface of the platen 24 or the 3D article 30 proximate to a build plane 34. The powder coater 32 can be a metering device containing metal powder including a rotating metering roller or valve to provide a very accurate and controlled powder thickness layer. The powder coater is translated along the build plane 34 and thus includes a horizontal movement mechanism. The horizontal movement mechanism can include a motorized lead screw as described for the vertical movement mechanism 26 or can include another mechanism such as a belt and pully system (with the pully attached to the powder coater and translated with a motorized gear). Powder coaters 32 with horizontal movement mechanisms as described are known in the art for powder based 3D printing systems 2.

A beam system 36 is configured to selectively apply one or more energy beams 38 to a layer of powder 40. The beam system 36 can generate electron and/or radiation beams 38. A beam system 26 for generating a radiation beam 38 can include a laser and a pair of galvanometer mirrors for generating and scanning the radiation beam 38 across the build plane 34. Beam systems 26 are known in the art for fusing metal or polymer powders in additive manufacturing systems 2.

FIG. 3 is a simplified electrical block diagram of system 2. A controller 42 is coupled to the gas handling system 22, the vertical movement mechanism 26, the coater 32, the beam system 36, a lock actuator 44, and a door close sensor 46. The lock actuator 44 will be described infra. The door close sensor 46 can take on any number of forms and can include a plurality of sensors 46 that verify whether the door 12 is in an open or closed position and whether the perimeter seal 16 is intact and properly sealing the chamber 6 from an ambient atmosphere. The sensors 46 can include proximity sensors, contact sensors, and gas pressure sensors as are known in the art.

The controller 42 includes a processor (at least one CPU) coupled to an information storage device (at least one non-transient or non-volatile device). The information storage device stores software modules that individually contain software instructions. The information storage device can include one or more of non-volatile or non-transient computer memory, flash memory, and magnetic or optical disk drives. The controller 42 is configured to operate various portions of system 2 when the processor executes the software instructions including the components described with respect to FIGS. 2 and 3 and other figures.

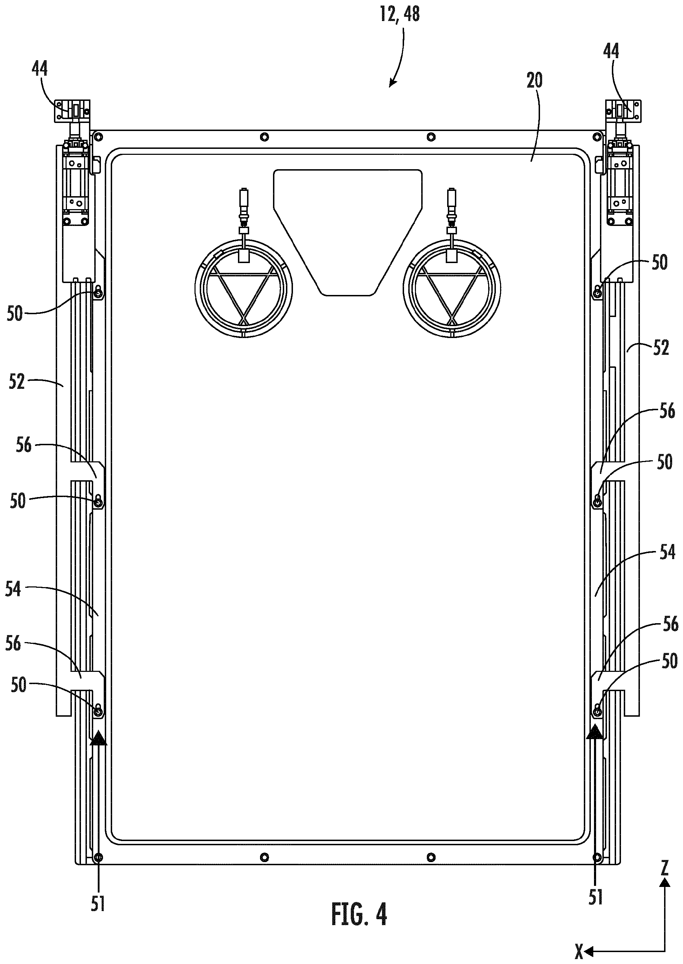

FIG. 4 is a rear view of the door 12 facing the inside surface 20. Also shown is a locking system 48 which includes a plurality of pins 50 and a pair of locking plates 52 that are individually coupled to a pair of lock actuators 44.

In the illustrated embodiment, the plurality of pins 50 includes two pin arrays 51 including a first pin array 51 and a second pin array 51 which are individually vertical arrangements of pins 50 arrayed or arranged along the vertical Z-axis. The two pin arrays 51 are individually arranged along vertical edges or ends 54 of door 12. The two pin arrays 51 are spaced apart from one another with respect to the first lateral axis X. The plurality of pins 50 extend along the second lateral axis Y when the door 12 is in a closed position and extend perpendicular to the inside surface 20 of door 12.

In the illustrated embodiment, the pair of locking plates 52 have a major axis along the vertical axis Z and include extension arms 56 that receive the pins 50 (through holes to be discussed infra) when the door 12 is closed. Thus, the pair of locking plates 52 individually receive the pins 50 of the pin arrays 51 when the door 12 is closed. The pair of locking plates 52 are proximate to the opposed vertical ends 54 of door 12 and are spaced apart from one another with respect to first lateral axis X.

In the illustrated embodiment, the pair of lock actuators 44 are individually coupled to the pair of locking plates 52. The lock actuators 44 are configured to individually vertically position the locking plates 52 between an unlocked and locked position. The door 12 can be opened and closed when the locking plates 52 are in an unlocked vertical position. The door is locked when the locking plates 52 are in a locked vertical position. The locking plates 52 also individually have a partially locked position that is vertically intermediate between the unlocked and locked positions.

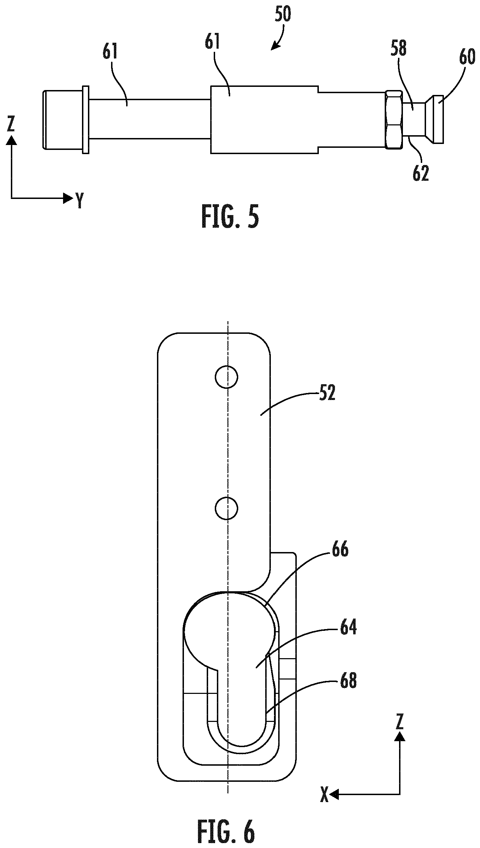

FIG. 5 is a side view of a first embodiment of a single pin 50 in isolation. The direction +Y is directionally away from the inside surface 20 of the door 12 or toward the locking plate 52. Pin 50 includes a cylindrical shank 58 and a distal head 60. The cylindrical shank 58 has a smaller diameter than the distal head 60. Pin 50 also has a proximal portion 61 that at least partially passes through the door 12 and is secured to the door 12. An annular slot 62 is defined along shank 58 between the proximal portion 61 and the distal head 60.

FIG. 6 is a frontal view of a portion of the locking plate 52. The locking plate 52 has a plurality or vertical array of holes 64 that pass through the locking plate 52. The plurality of holes 64 individually include a round or circular wider section 66 and a narrower section 68 that are arranged along the vertical axis Z.

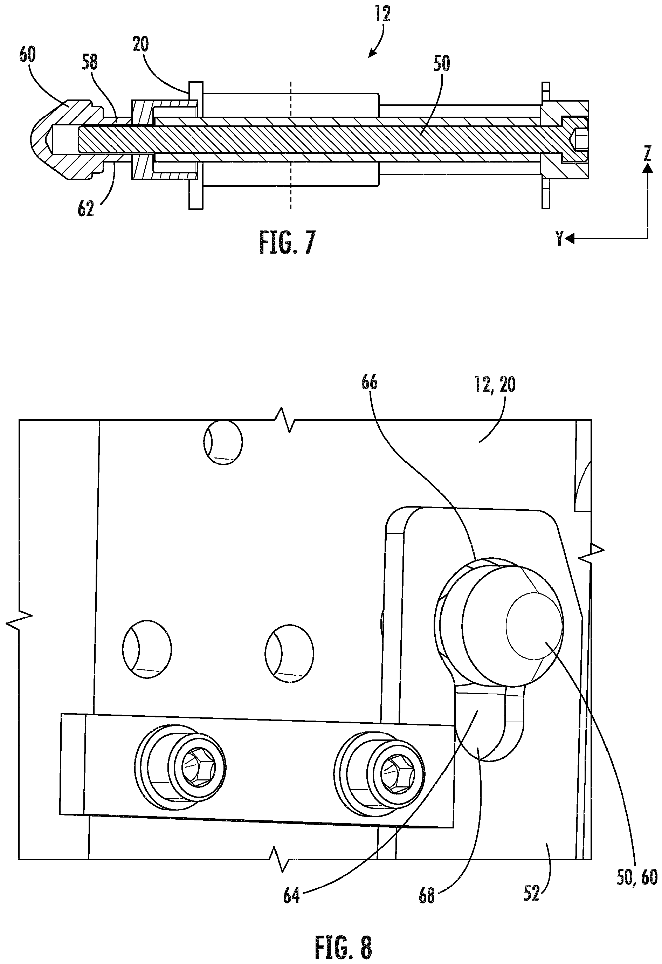

FIG. 7 is a cross-sectional view of a portion of the door 12 through a second embodiment of a single pin 50. The pin 50 includes cylindrical shank 58 and distal head 60. The shank 58 has a smaller diameter than the distal head 60 such that an annular slot 62 is defined along shank 58. When a locking plate 52 is locked to the pin 50, a portion of the locking plate 52 enters the annular slot 62 under the distal head 60. Geometrically, the shank 58 and distal head 60 extend outwardly from the inside surface 20 of the door 12 and extend in the +Y direction along the second lateral axis Y when the door 12 is in the closed position.

FIG. 8 is an isometric drawing of a portion and embodiment of door 12 and locking plate 52 to illustrate locking between the locking plate 52 and pin 50. When the door 12 is initially closed, the larger diameter distal head 60 is aligned with and received into the round wider section 66 of the hole 64. The locking plate 52 is locked to the pin 60 when the lock actuator 44 vertically shifts the locking plate 52 so that the distal head 60 is over the narrower section 68 of the hole 64. Then a portion of the locking plate 52 is in the annular slot 62 and underneath the distal head 60.

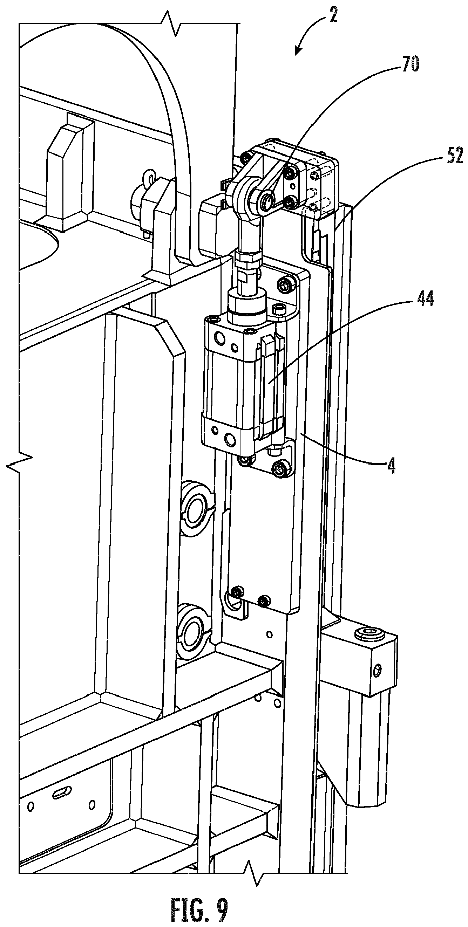

FIG. 9 is an isometric view of a portion of system 10 to illustrate the lock actuator 44 coupled to the locking plate 52. In the illustrated embodiment, the actuator 44 is a pneumatic actuator 44 that is mounted or affixed to housing 4. The pneumatic actuator 44 is configured to vertically translate a coupler 70 which in turn vertically translates the locking plate 52 between the unlocked and locked positions. The illustrated pneumatic actuator 44 includes a cylinder and piston that converts gas (e.g., air) pressure in the cylinder into mechanical motion of the piston. Such actuators are well known.

In an alternative embodiment, the actuator 44 can be a motor that turns a lead screw. The lead screw threads into a moving collar that is attached to the coupler 70. As the motor turns the lead screw, interaction between outer helical threads of the lead screw and internal threads of the collar would induce vertical motion of the collar which in turn translates the coupler and the locking plate 52 between the locked and unlocked positions.

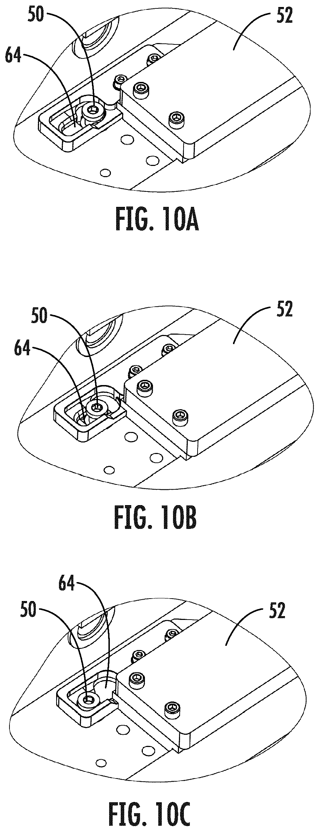

FIGS. 10A-C depict locking plate 52 and pin 50 interaction in unlocked (10A), partially or pre-locked (10B), and locked (10C) positions of the locking plate 52 with respect to the pin 50. In the unlocked position (10A), the round wider section 66 of the hole 64 is centered upon or concentric with the pin 50. In the locked position (10C), the narrower section 68 of the hole 64 is aligned with the pin 50. The intermediate position (10B) is between the unlocked (10A) and locked (10C) positions.

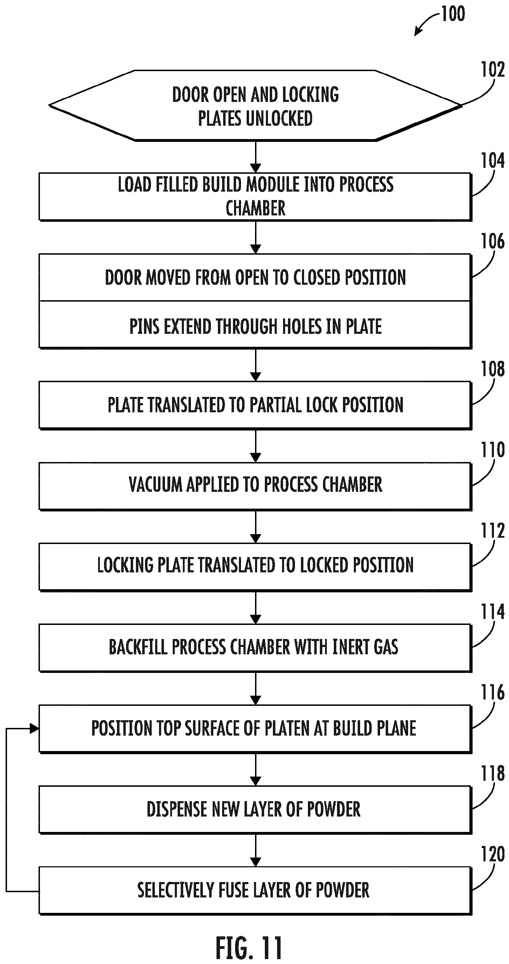

FIG. 11 is a flowchart depicting an embodiment of a method for manufacturing a three-dimensional (3D) article 30 using a three-dimensional (3D) printing system 2. Some of steps 102 are performed by controller 42 operating or actuating portions of system 2.

According to 102, the door 12 is open and the locking plates 52 are in an unlocked position. According to 104, a build module with metal powder is loaded into the process chamber 6.

According to 106, the door 12 is moved from an open to closed position. As part of step 106, the plurality of pins 50 individually pass into the circular wider sections 66 of the holes 64 in the locking plates 52 (FIG. 8 or FIG. 10A). In response to the door closure the locking plates 52 translate vertically to a partially locked (FIG. 10B) state according to 108.

According to 110, the gas handling system 22 is operated to apply vacuum to process chamber 6. According to 112, the actuator 44 is operated to move the locking plates 52 vertically to the locked position (FIG. 10C). In this position, a portion of the locking plates 52 is within each of the annular slots 62. According to 114, the gas handling system 22 is operated to backfill the process chamber with inert gas.

According to a repetition of steps 116 to 120, the system 2 is operated to fabricate the 3D article in a layer-by-layer manner. One cycle through steps 116-120 forms one layer. According to 116, the vertical movement mechanism 26 is operated to position a top surface 28 of initially the platen 24 and later the 3D article 30 proximate to the build plane 34. The coater 32 is then operated to deposit a new layer of metal powder 40 over the top surface. According to 120, the beam system 36 is operated to selectively fuse the new layer of metal powder 40 and to form a new layer of the 3D article 30.

The specific embodiments and applications thereof described above are for illustrative purposes only and do not preclude modifications and variations encompassed by the scope of the following claims. For example - the illustrated embodiment depict the actuators 44 translating the locking plates 52 in a vertical direction between unlocked and locked positions. In alternative embodiments, the translation can be horizontal or oblique to a vertical axis. In other embodiments there may be only one locking plate 52 or more than two locking plates 52. In yet other embodiments, a single actuator 44 can be coupled to multiple locking plates.

## Claims

1. A three-dimensional printing system for manufacturing a three-dimensional article comprising:
a housing enclosing a process chamber and having a vertical front surface defining a vertical opening coupled to the process chamber;
a door moveably coupled to the vertical front surface and having an open position providing access to the opening and a closed position with an inside surface of the door covering the opening;
a door locking system including:
a plurality of pins that extend along a direction that is perpendicular to the vertical front surface when the door is in the closed position, the plurality of pins individually have a shank coupled to a distal head to define a slot along the shank;
a locking plate defining a plurality of holes individually having a wider section and a narrower section along a latching axis, the plurality of holes are positioned to receive the plurality of pins when the door is rotated into the closed position; and
a lock actuator coupled to the locking plate and configured to translate the locking plate along the locking axis between an unlocked position at which the wider section aligns with the distal head and a locked position at which the narrower section is positioned under the distal head; and
a perimeter seal that seals the process chamber to the door when the door is in the closed position.

2. The three-dimensional printing system of claim 1 wherein the locking plate and the lock actuator are coupled to the housing, the plurality of pins extend laterally from the inside surface of the door.

3. The three-dimensional printing system of claim 1 wherein the locking axis is a vertical axis.

4. The three-dimensional printing system of claim 1 wherein the locking plate includes two locking plates that are located at opposing sides of the opening.

5. The three-dimensional printing system of claim 4 wherein the two locking plates individually have a long axis aligned with a vertical axis and the locking axis, the two locking plates are spaced apart along a first lateral axis, the pins extend along a second lateral axis, the first lateral axis, the second lateral axis, and the vertical axis are mutually perpendicular.

6. The three-dimensional printing system of claim 1 further comprising a controller configured to operate the lock actuator to translate the locking plate between unlocked position and the locked position and to operate the three-dimensional printing system to fabricate the three-dimensional article.

7. The three-dimensional printing system of claim 6 wherein the controller is configured to:
sense the door being moved from the open to the closed position; and
in response to sensing the door being moved from the open to the closed position, operate the lock actuator to move the locking plate from an unlocked position to a partially locked position.

8. The three-dimensional printing system of claim 7 wherein the controller is configured to:
operate a gas handling system to draw a vacuum inside the process chamber;
operate the lock actuator to move the locking plate from the partially locked position to a fully locked position; and
operate the gas handling system to backfill the process chamber with argon.

9. The three-dimensional printing system of claim 6 wherein the controller is configured to:
operate the lock actuator to move the locking plate to a locked configuration;
operate the gas handling system to provide a non-oxidizing gas in the process chamber; and
operate the three-dimensional printing system to fabricate the three-dimensional article.

10. A method of manufacturing a three-dimensional article with the apparatus of claim 1, the method comprising:
operating the lock actuator to translate the locking plate from the unlocked position to the locked position; and
operating the three-dimensional printing system to fabricate the three-dimensional article.

11. The method of claim 10 further comprising:
operating a gas handling system to evacuate the process chamber; and
operating the gas handling system to backfill the process chamber with a non-oxidizing gas before operating the three-dimensional printing system to fabricate the three-dimensional article.

12. The method of claim 11 wherein operating the actuator occurs at least partially concurrently with operating the gas handling system.

13. The method of claim 10 wherein the latching axis is a vertical axis, operating the actuator translates the locking plate along the vertical axis from the unlocked position to the locked position.

14. The method of claim 10 wherein the locking plate includes two locking plates including a first locking plate coupled to a first lock actuator and a second locking plate coupled to a second lock actuator, operating the actuator includes operating the first and second lock actuators.

15. The method of claim 14 wherein the two locking plates individually having a long axis aligned with a vertical axis and the locking axis, the two locking plates are spaced apart along a first lateral axis, the pins extend along a second lateral axis, the first lateral axis, the plurality of pins includes first and second vertical arrays of pins, the second lateral axis, and the vertical axis are mutually perpendicular, operating the first and second actuators translates the first and second locking plates along the vertical axis and locks the first and second locking plates to the first and second vertical arrays of pins respectively.

16. A three-dimensional printing system for manufacturing a three-dimensional article comprising:
a housing enclosing a process chamber and having a vertical front surface defining a vertical opening coupled to the process chamber;
a pair of locking plates including a first locking plate and a second locking plate slidingly coupled to the housing at opposed positions with respect to a first lateral axis, the pair of locking plates individually having a long axis aligned with a vertical axis and individually defining a plurality of holes, the plurality of holes individually including a wider section and a narrower section along a latching axis, the latching axis aligned with the vertical axis;
a door moveably coupled to the vertical front surface and having an open position providing access to the opening and a closed position with an inside surface of the door covering the opening;
a plurality of pins coupled to the door including a pair of pin arrays including a first pin array and a second pin array corresponding to the first and second pair of locking plates, the pair of locking plates are spaced apart with respect to the first lateral axis, the plurality of pins extend from the inside surface and individually have shank coupled to a distal head to define a slot along the shank between the inside surface and the distal head, closing the door causes the plurality of pins to be individually received into the wider section of one of the plurality of holes,
at least one lock actuator coupled to the pair of locking plates and configured to translate the pair of locking plates along the locking axis between an unlocked position at which the wider section aligns with the distal head and a locked position at which the narrower section is positioned under the distal head; and
a perimeter seal that seals the process chamber to the door when the door is in the closed position.

17. The three-dimensional printing system of claim 16, further comprising a controller configured to operate the at least one lock actuator to translate the pair of locking plates between the locked and unlocked position and to operate the three-dimensional printing system to fabricate the three-dimensional article.

18. The three-dimensional printing system of claim 16 wherein the at least one lock actuator includes a first lock actuator coupled to the first locking plate and a second locking actuator coupled to the second locking plate.

19. A method of manufacturing a three-dimensional article using the system of claim 16, the method comprising:
receiving an indication that the door is in a closed or partially closed state;
operating a gas handling system to apply a vacuum to the process chamber;
operating the at least one lock actuator to translate the pair of locking plates along the vertical axis to a locked position;
operating the gas handling system to backfill the process chamber with a non-oxidizing gas; and
operate the three-dimensional printing system to fabricate the three-dimensional article.

20. The method of claim 19 further comprising operating the lock actuator to translate the locking plates to a partially locked state before operating the gas handling system.
